# EUROPEAN PATENT APPLICATION

(11) **EP 2 072 596 A1**
(43) Date of publication of application: **24.06.2009**
(21) Application number: 08075501.0
(22) Date of filing: 19.05.2008
(51) Int. Cl.: C09J 7/02

(54) **Self-adhesive sheet with a silicone coated polypropylene layer and a process for production thereof**

(30) Priority: 14.11.2007 IT MO20070341
(71) Applicant: Diaures S.p.A., 41019 Soliera (MO) (IT)
(72) Inventor: Pastorelli, Dimo, 41012 Carpi (Modena) (IT)
(74) Representative: Gotra, Stefano

(57) **Abstract**

A process for production of a self-adhesive sheet, comprising following stages: predisposing a front layer and a support layer; spreading silicone on an upper surface of the support layer; polymerizing the silicone; applying the front layer to the upper surface of the support layer, interposing an adhesive substance between the layers; characterised in that the support layer is made of polypropylene.

## Description

The invention relates to a self-adhesive sheet and a production process therefor.

Self-adhesive materials, i.e. objects predisposed to be applied to surfaces without use of glue, are widely used for the most varied applications. In general these materials are sheets constituted by a front layer and a support layer. The front layer exhibits an in-view surface (on which graphic or textual elements are generally present, or even applications in relief) and an adhesive surface; the support layer has a covering function of the adhesive surface and can be removed there-from.

In prior art production processes for self-adhesive sheets as described above, the support layer is subjected to a siliconizing process, necessary for enabling detachment of the adhesive surface of the front layer. The siliconizing process consists in a stage of spreading silicone on the support and a following polymerizing stage, by heat treatment at high temperature, of the silicone. The process temperature influences the choice of the material constituting the support layer, this material must be maintained integral during the course of the described heat treatment.

At present, the support layers are made of paper or release films specifically treated for siliconizing. During the course of the production process, these supports are spread with silicone, subject to a heat treatment and finally re-moistened and cooled (paper reconditioning).

A drawback of the products obtained using the described process, progressively perceived as being important in the light of the development of public sensitivity to ecological considerations, relates to the elimination of the siliconized supports after the application of the adhesive. Though made of paper, these supports after siliconization lose their recyclability and have to be disposed-of as solid urban refuse.

The main aim of the present invention is to obviate the above-described drawback in the prior art.

An advantage of the self-adhesive sheet of the present invention derives from the recyclability of the support layer to be eliminated after use of the product.

An advantage of the process for production of self-adhesive sheets of the present invention relates to the use of materials having high sensitivity to heat as support layers of the sheet.

Further characteristics and advantages of the invention will better emerge from the detailed description that follows of some non-exclusive embodiments of the invention, provided by way of non-limiting example in the accompanying figures of the drawings, in which:

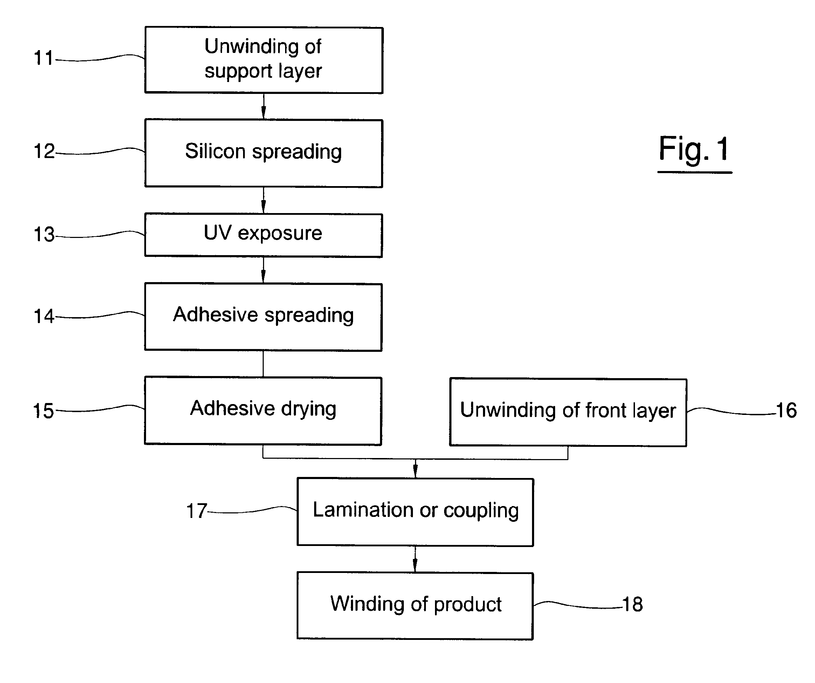

figure 1 is a block diagram which identifies the various stages of the process of the invention;
figure 2 is a self-adhesive sheet according to the invention.

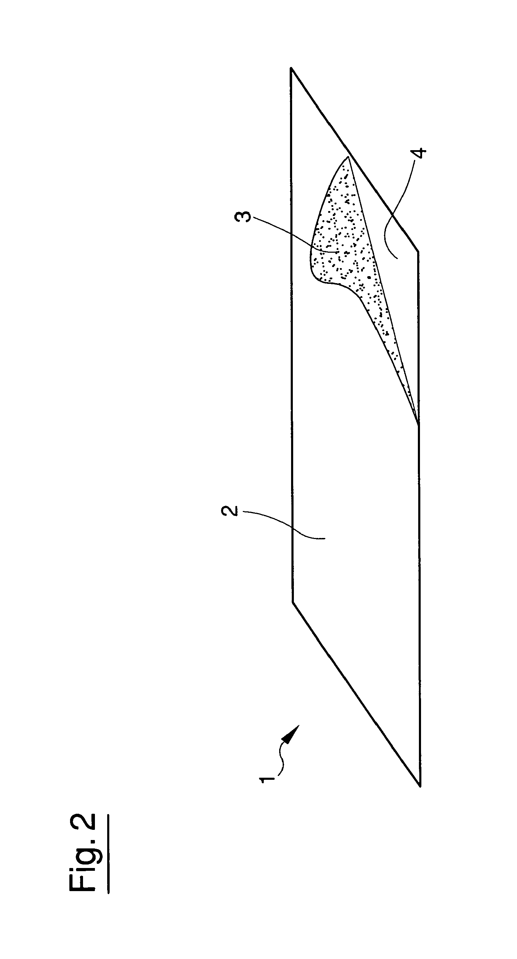

With reference to figure 2, the number 1 denotes in its entirety a self-adhesive sheet 1 comprising: a support layer 4; a front layer 2 associated to the support layer 4; an adhesive substance 3 interposed between the support layer 4 and the front layer 2. The front layer 2 can be dissociated from the support layer 4; the adhesive substance 3 is predisposed to allow adhesion of the front layer 2, dissociated from the support layer 4, to another surface. In particular the self-adhesive sheet is distinguished from prior art products inasmuch as the support layer 4 is a polypropylene coated with polymerised silicone. This technical characteristic leads to a considerable advantage as polypropylene, even when coated with silicone, can be recycled as packaging material. Siliconized supports presently used must on the contrary be dispensed with as solid urban refuse.

The front layer 2 of the product can be constituted by any material. Preferably it is a paper or a synthetic film specifically predisposed to be printed on; as previously mentioned, decorative motifs or textual characters are usually impressed on the in-view surface of the front layer 2. Projecting elements of any shape or nature can also be applied to the front layer 2.

The adhesive substance 3 interposed between the front layer 2 and the support layer 4 is predisposed to dissociate from the silicone coating of the support layer 4 in order to let the product be used as an adhesive. The adhesive substance is preferably a polymer in a watery solution, either acrylic or vinylic. In a further embodiment, the adhesive substance 3 can be a styrol-butadiene copolymer, also in a watery solution. The above-mentioned substance might also be compounded with a tackifier in order to vary their adhesive and cohesive characteristics.

The process for the production of a self-adhesive sheet of the present invention comprises the following stages: predisposing a front layer and a support layer; spreading the silicone on an upper surface of the support layer; polymerizing the previously-spread silicone 13; applying the front layer to the upper surface of the support layer, interposing an adhesive substance between the layers. The process is characterised with respect to the known processes by to the fact that it uses a support sheet made of polypropylene.

The use of a polypropylene layer in the described process substantially modifies the characteristics of the process; in particular, the stage of polymerization of the spread silicone can no longer be performed according to the known ways in the prior art. In the prior-art processes, the support layer 4, after application of the silicone, is introduced into a hot-air tunnel where a heat process polymerizes the substance. In the present case, the high temperatures (from 120°C to 150°C) necessary for starting off the polymerization reaction cannot be used as they would be considerably above the polypropylene-softening temperature. To solve the problem of the polymerization of the silicone spread on the support layer in the present process, a silicone spread on the support layer 4 is exposed to ultraviolet radiation. The silicone used must obviously be of the suitable type, and thus must be specifically predisposed to polymerize by effect of the ultraviolet radiations to which it is exposed. The polymerization is done, thanks to the described technology, also at lower temperatures with respect to the softening temperature of the polypropylene.

Having described the salient characteristic of the process of the invention, we now examine the production process in detail.

The above-mentioned stages of predisposing the front layer 2 and the support layer 4 respectively comprise a stage of unwinding the layer, in the form of a band, starting from a supply reel and a stage of moving the layer (i.e. the band of the layer) along at least an advancement direction which is perpendicular to the axis of the relative supply reel.

The advancement speed of the layers, for reasons which will be discussed herein below, is comprised between 100 m/min and 300 m/min.

The process can advantageously comprise a stage of winding the finished product on a reel. In this case, before being sold, the reel is generally unwound to enable cutting and packaging of the product to be presented to the customer.

The previously-defined stage of applying the front layer to the upper surface of the support by interposing an adhesive substance between the layers 14, 17 comprises a stage of spreading the adhesive substance on the upper surface of the support layer 14 and a successive stage of laminating the front layer above the support layer 17. The lamination is performed in a known way and enables the two layers to be solidly retained to one another. As the adhesive substance that is spread is preferably an acrylic or vinylic resin in a watery solution, the process must comprise a stage of drying the adhesive substance 15, possibly before lamination. The drying is done by heating, bringing the adhesive substance, i.e. the layer of polypropylene on which it is spread, up to a temperature comprised between 50°C and 70°C. Specifically, the raising of the temperature is preferably obtained by introducing the support layer spread with the adhesive substance into a hot-air tunnel.

Again, the relatively low softening temperature of the polypropylene is revealed to be problematic in the stage of drying. The choice of temperature, as well as the advancement speed of the above-defined support layer, have been derived from a specific experimental research performed to ascertain these parameters.

## Claims

1. A process for production of a self-adhesive sheet, comprising following stages: predisposing a front layer and a support layer; spreading silicone on an upper surface of the support layer; polymerizing the silicone; applying the front layer to an upper surface of the support layer, interposing an adhesive substance between the layers; **characterised in that** the support layer is made of polypropylene.

2. The process of claim 1, **characterised in that** the stage of polymerizing the silicone spread on the support layer comprises a stage of exposing the spread silicone on the support layer to ultraviolet radiations, the silicone being predisposed to polymerize by effect of the ultraviolet radiations, the silicone reacting at lower temperatures than softening temperatures of polypropylene.

3. The process of claim 2, **characterised in that** the stage of applying the front layer to the upper surface of the support layer by interposing an adhesive substance between the layers comprises a stage of spreading the adhesive substance to the upper surface of the support layer and a successive stage of laminating the frontal layer above the support layer.

4. The process of claim 3, **characterised in that** the adhesive substance is a resin in a watery solution and **in that** the process comprises a stage of drying the adhesive substance before the stage of laminating the front layer on the support layer.

5. The process of claim 4, **characterised in that** the adhesive substance applied is an acrylic resin.

6. The process of claim 4, **characterised in that** the adhesive substance applied is a vinylic resin.

7. The process of one of claims 4 to 6, **characterised in that** during the stage of drying the adhesive substance, the adhesive substance is heated up to a temperature comprised between 50°C and 70°C.

8. The process of claim 7, **characterised in that** during the stage of drying the adhesive substance the support layer spread with adhesive substance is introduced into a hot-air tunnel.

9. The process of any one of the preceding claims, **characterised in that** the stages of predisposing the front layer and the support layer respectively each comprise a stage of unwinding the front layer or the support layer, in a band form, from a relative supply reel and a stage of moving the layer along at least an advancement direction which is normal to an axis of the relative reel, an advancement speed of the front layer and the support layer being comprised between 100 m/min. and 300 m/min.

10. A self-adhesive sheet comprising a support layer (4), a front layer (2) associated to the support layer (4) and an adhesive substance (3) interposed between the front layer (2) and the support layer (4); the front layer (2) being dissociable from the support layer (4); the adhesive substance (3) being predisposed to allow adhesion of the front layer (2), dissociated from the support layer (4), to another surface; **characterised in that** the support layer (4) is made of polypropylene coated with polymerized silicone.
